Europäisches Patentamt

European Patent Office

Office européen des brevets

(11) Numéro de publication: **0 488 838 B1**

## (12) FASCICULE DE BREVET EUROPEEN

(45) Date de publication de fascicule du brevet: **12.10.94**

(21) Numéro de dépôt: **91402978.0**

(22) Date de dépôt: **06.11.91**

(51) Int. Cl.⁵: **B01D 19/00**, E21B 43/34, F04D 31/00, F17D 1/00, F17D 3/03

(54) **Dispositif d'agitation et de maintien en suspension des particules d'un écoulement polyphasique.**

(30) Priorité: **27.11.90 FR 9014917**

(43) Date de publication de la demande:
**03.06.92 Bulletin 92/23**

(45) Mention de la délivrance du brevet:
**12.10.94 Bulletin 94/41**

(84) Etats contractants désignés:
**DE GB IT NL**

(56) Documents cités:
**EP-A- 0 360 034**
**WO-A-90/08585**

**PATENT ABSTRACTS OF JAPAN vol. 7, no. 252 (C-194)(1397), 9 novembre 1983; & JP - A - 58139709 (DORYOKURO KAKUNENRYOKAI-HATSU JIGYODAN) 19.08.1983**

(73) Titulaire: **INSTITUT FRANCAIS DU PETROLE**
**4, Avenue de Bois Préau**
**F-92502 Rueil-Malmaison (FR)**

(72) Inventeur: **Cessou, Maurice**
**Montée du Télégrahe,**
**Communay**
**F-69360 Saint Symphorien d'Ozon (FR)**

## Description

La présente invention concerne un perfectionnement au dispositif comportant un réservoir et des moyens d'introduction d'un effluent, notamment polyphasique dans ce réservoir. Le perfectionnement selon l'invention permet de rendre homogène la phase liquide contenue dans ce réservoir.

La présente invention est particulièrement bien adaptée pour les réservoirs d'amortissement des fluctuations de composition polyphasique comportant une phase fluide notamment liquide et une phase solide sous forme de particule. Elle permet d'améliorer la suspension des particules solides dans la phase du fluide, notamment liquide.

Le perfectionnement selon l'invention peut être avantageusement appliqué au brevet FR-A-8901332 qui décrit un dispositif de régulation et d'amortissement des fluctuations de composition d'un écoulement polyphasique comportant au moins une phase liquide et une phase gazeuse.

Ce dispositif comporte un réservoir de séparation des phases, le réservoir comporte au moins une ouverture d'arrivée du mélange polyphasique, et des moyens de prélèvement du contenu de ce réservoir.

Lesdits moyens de prélèvement s'étendent dans le réservoir de manière à traverser l'interface liquide-gaz en fonctionnement normal, et comportent des ouvertures de prélèvement réparties de part et d'autre de l'interface en fonctionnement normal, la somme des sections de passage des ouvertures estimée à partir d'une position de référence sur au moins une portion d'un axe vertical varie en fonction de la cote, considérée sur ledit axe et pour ladite portion, ladite portion s'étendant en fonctionnement normal de part et d'autre de ladite interface.

Les moyens de prélèvement pourront comporter au moins un tube de prélèvement et les ouvertures de prélèvement pourront être réparties sur ce tube.

Le tube de prélèvement pourra comporter au moins une sortie commune pour la phase liquide et la phase gazeuse.

Le tube de prélèvement pourra comporter au moins deux sorties distinctes dont l'une prélève une phase riche en liquide.

Le tube de prélèvement pourra comporter au moins deux sorties distinctes dont l'une prélève une phase riche en gaz.

Comme celà a déjà été dit, la présente invention permet de perfectionner le procédé et le dispositif décrits notamment dans le brevet FR-A-8901332, de rendre l'homogénéisation des phases encore meilleure et de mettre et maintenir en suspension des particules dans l'effluent.

Selon l'art antérieur, un des inconvénients majeurs dans le fonctionnement du réservoir régulateur ou ballon régulateur est la formation de dépôts solides dus à l'accumulation des particules au fond du ballon, ces dépôts risquant de boucher les orifices de sortie du ballon et d'en modifier le volume.

Il est alors nécessaire d'effectuer des purges qui nécessitent un arrêt de l'appareil et qui s'adaptent mal aux conditions de fonctionnement difficiles telles celles rencontrées au fond de l'eau dans le cadre d'une application sous-marine relative par exemple au traitement d'effluents pétroliers.

Ainsi, la présente invention concerne un dispositif de mise et maintien en suspension des particules d'un effluent comportant une phase liquide et une phase gazeuse, la phase liquide pouvant contenir des particules solides. Ce dispositif comporte un réservoir de séparation des phases, le réservoir comporte des moyens de prélèvement de son contenu, le réservoir comporte au moins une ouverture d'arrivée de l'effluent et des moyens d'injection situés à proximité du fond du réservoir. Le dispositif se caractérise en ce que lesdits moyens d'injection comportent au moins un orifice d'injection produisant au moins un jet dirigé vers le fond du réservoir. Grâce à cette disposition des orifices, les jets provoqués par l'écoulement de l'effluent à travers les orifices permettront de décoller les solides accumulés au fond du réservoir après une période d'arrêt et de créer des courants ascendants maintenant les solides en suspension lorsque l'appareil est en fonctionnement.

Les moyens d'injection pourront être situés dans la moitié inférieure du réservoir.

Les moyens d'injection pourront comporter au moins un tube d'injection.

Ledit tube d'injection pourra comporter des orifices répartis sur sa partie inférieure et dirigés vers le bas et en biais. Pour l'harmonisation des flux, l'angle des orifices par rapport à la verticale sera compris entre 0° et 90°. La valeur optimale de l'angle sera voisine de 45°.

L'optimisation de fonctionnement d'un tel dispositif est liée à l'uniformisation des flux créés dans le réservoir, donc au choix du nombre et de la taille des orifices situés sur le tube d'injection, ainsi que de leur forme. Ce choix résulte d'un compromis entre la nécessité d'avoir une bonne agitation dans le ballon, c'est-à-dire, une vitesse ascensionnelle supérieure à la vitesse de sédimentation des particules, sans pour autant créer des pertes de charges excessives.

Lesdits orifices auront une forme circulaire préférentiellement. Leur diamètre sera compris entre 5 et 20 mm de façon à ce qu'ils ne se bouchent pas eux-mêmes et qu'ils assurent un bon fonctionnement du système. Leur nombre et taille sont fonction de la vitesse souhaitée. A titre d'exemple, pour une pompe de 25000 barrels per day - gas oil ratio 10 (débit total 165m³/h aux conditions d'aspiration) on obtient une vitesse de 5 à 6m/sec dans une tuyauterie de 100 mm (4 pouces). Si l'on souhaite conserver la même vitesse dans les orifices, il faut avoir 100 trous de diamètre 10 mm ou 45 trous de diamètre 15 mm.

Le tube pourra comporter au moins une arrivée de l'effluent.

Le tube pourra comporter au moins deux arrivées distinctes de l'effluent.

La présente invention concerne également l'application du dispositif décrit précédemment à la régulation de l'alimentation d'une pompe polyphasique.

La présente invention concerne également l'application du dispositif décrit précédemment à l'amélioration de l'homogénéisation des phases dans le réservoir.

La présente invention sera mieux comprise et ses avantages apparaîtront plus clairement à la description qui suit d'exemples particuliers, nullement limitatifs, illustrés par les figures annexées parmi lesquelles :

- la figure 1 représente un premier mode de réalisation comportant des moyens d'injection ayant une seule entrée.
- la figure 2 représente un autre mode de réalisation pour lequel les moyens d'injection comportent deux entrées.
- les figures 3 et 4 représentent deux variantes de réalisation des moyens d'injection .
- la figure 5 montre une façon de réaliser les orifices d'injection dans le cas où l'angle est optimal et vaut 45°.
- la figure 6 montre une des améliorations possibles due au moyen d'injection appliqué à un réservoir comportant des moyens de prélèvement possédant deux sorties.

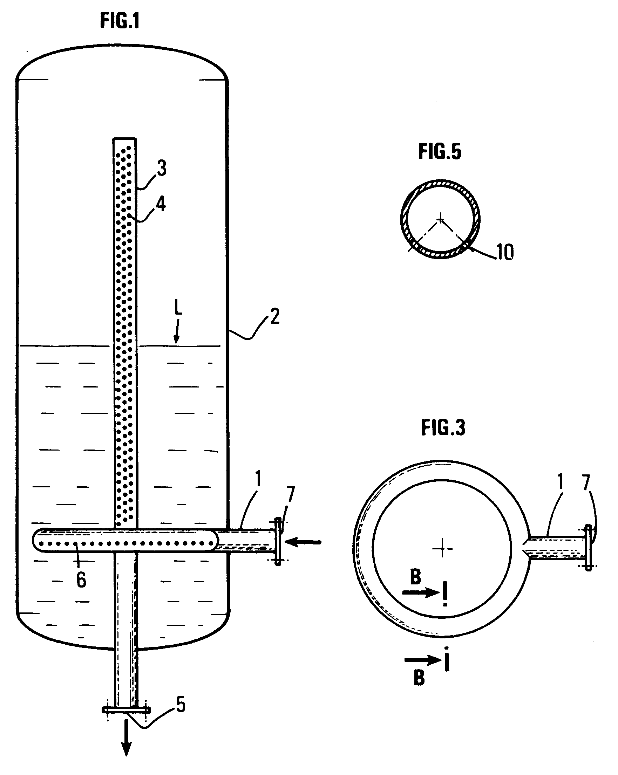

Sur la figure 1 la référence 1 désigne un tube d'injection d'un mélange polyphasique dans un réservoir 2 de transfert. Ce réservoir comporte un tube de prélèvement 3. Ce tube comporte des trous 4 répartis sur sa longueur. Le tube 3 est raccordé à un tube 5 de sortie du mélange polyphasique vers le lieu de destination.

Le tube d'injection est situé à proximité du fond du réservoir, dans la moitié inférieure du réservoir, et a la forme d'un tore. Il peut être sensiblement horizontal par rapport au fond du réservoir. En outre, ce tube comporte des orifices 6 situés sur sa partie inférieure, dirigés vers le bas et en biais de part et d'autre de l'axe vertical perpendiculaire au tube. Ce tube est raccordé à un tube 7 d'arrivée du mélange polyphasique. Le tube de prélèvement 3 se trouve entouré par le tube d'injection.

On ne sortira pas du cadre de la présente invention si les trous sont orientés vers le fond du réservoir et si leurs axes sont sensiblement verticaux.

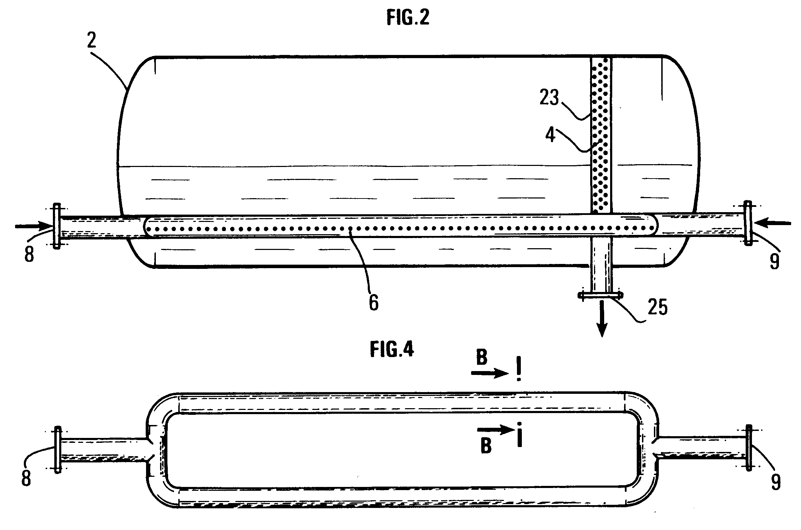

La figure 2 représente un autre mode de réalisation du tube d'injection . Les éléments communs aux figures 1 et 2 portent les mêmes références. Le tube d'injection est situé à proximité du fond du réservoir dans sa moitié inférieure. Il peut être sensiblement horizontal par rapport au fond du réservoir.

Le réservoir comporte un tube de prélèvement 23 qui comporte des trous 4 répartis sur sa longueur. Le tube 23 est raccordé à un tube 25 de sortie du mélange polyphasique vers le lieu de destination.

Ledit tube a la forme d'un rectangle et possède deux entrées du mélange polyphasique, l'une 9 située à l'extrémité du réservoir proche du tube de prélèvement, l'autre 8 située à l'extrémité opposée du réservoir. Le tube de prélèvement est entouré par le tube d'injection et comporte des trous de prélèvement. Il est relié à un tube de sortie 25 du mélange polyphasique vers le lieu de destination.

La figure 3 représente de manière développée un mode de réalisation du tube d'injection qui a la forme d'un tore.

La figure 4 donne un autre mode de réalisation du tube d'injection pour lequel la forme est rectangulaire.

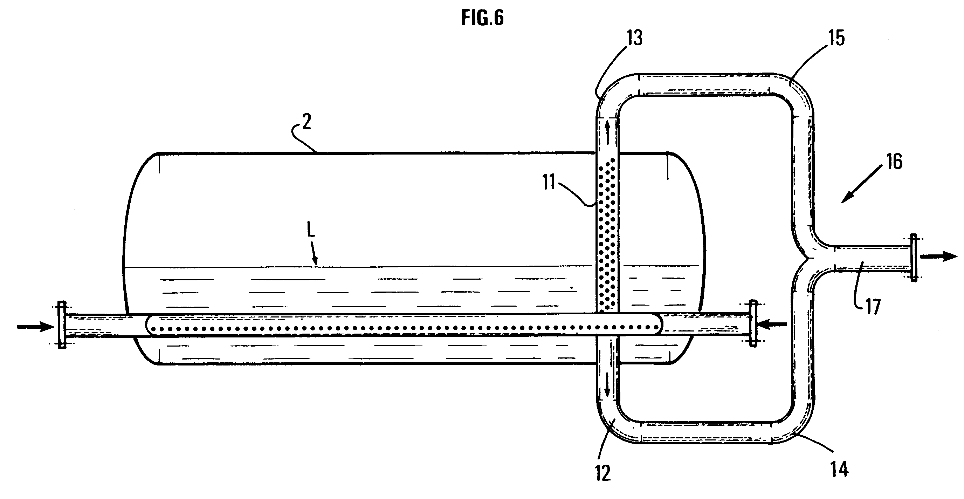

La figure 5 représente de manière développée un mode de réalisation du tube d'injection dans lequel sont pratiqués des orifices circulaires 10 . On constate que dans ce mode de réalisation, les orifices sont situés dans la partie inférieure du tube de part et d'autre de l'axe vertical perpendiculaire au tube, dirigés vers le bas et en biais de part et d'autre de l'axe vertical perpendiculaire au tube avec un angle préférentiel de 45°.

On ne sortira pas de la présente invention si le tube comporte plusieurs rangées d'orifices pouvant être disposés en quinconce.

La figure 6 représente un autre mode de réalisation. Les éléments communs aux figures 1 et 2 portent les mêmes références. Le tube de prélèvement 11 traverse de part en part le réservoir dans le sens de la hauteur et possède deux sorties, l'une basse 12 et l'autre haute 13 connectées respectivement à un tube d'acheminement bas 14 et un tube d'acheminement haut 15. Ces tubes se rejoignent en 16 et le mélange résultant est transféré par le tube 17.

Le tube d'acheminement bas 14 transfère un effluent essentiellement liquide alors que c'est l'effluent essentiellement gazeux que transporte le tube d'acheminement haut 15.

Le fonctionnement du dispositif selon les modes de réalisation des figures 1 et 2 est donné ci-après.

Le réservoir ou ballon régulateur polyphasique 2 a pour but de réduire les variations de GOR que l'on peut observer dans un écoulement polyphasique intermittent (écoulement à bouchons de liquide et à poches de gaz), de transformer un écoulement à bouchons en un écoulement à bulles (écoulement homogène), de disposer d'une réserve de liquide suffisante pour évacuer une quantité importante de gaz. Par GOR, on entend le rapport de volume de gaz au volume de liquide (en Anglais "Gas Oil Ratio" ).

Le ballon est un équipement statique qui permet de transformer une variation du GOR du fluide à l'entrée en une variation de niveau dans le ballon, cette variation de niveau pouvant être de faible amplitude (cas d'un ballon cylindrique à axe horizontal) ou d'amplitude plus forte (cas d'un ballon cylindrique à axe vertical).

De plus, la quantité de liquide retenue dans le ballon peut constituer une réserve utilisable pour mouiller une poche de gaz sec importante (plusieurs mètres cubes) et l'évacuer avec un GOR permettant d'obtenir un gain de pression suffisant avec un système de pompage polyphasique. Ce ballon peut servir également à recevoir, en cas d'utilisation d'un recycleur de phase, la phase liquide ou gazeuse extraite du mélange polyphasique à la sortie de l'unité de compression. Dans le cadre d'une application pétrolière, ce ballon peut aussi servi à séparer une partie de l'eau contenue dans l'effluent pétrolier, et à séparer une partie du sable contenu dans l'effluent pétrolier.

Ce ballon est équipé d'un tube percé permettant la sortie du mélange polyphasique.

L'évacuation du fluide polyphasique séparé ou partiellement séparé dans le ballon, est faite par le tube percé 3 ou 23 selon que l'on considère le mode de réalisation de la figure 1 ou 2, placé verticalement dans le ballon. Ce tube permet d'évacuer le liquide proportionnellement à la section de passage immergée SL. De même, le gaz est évacué proportionnellement à la section de passage non immergée SG.

Si l'on appelle Pi, la pression statique dans le ballon au niveau d'un orifice i du tube percé et Ps le pression du fluide à la sortie du tube percé, les débits de sortie du liquide et du gaz sont donnés par la relation :

$$Pi - Ps = f(Qi)$$

Qi : débit de fluide passant au travers d'un orifice i.

La fonction f(Qi) prend en compte la perte de pression au travers de l'orifice (ou le gain de pression donné par le fluide descendant - effet éjecteur-), la perte de charge linéaire dans le tube, ainsi que les pertes de charges dues aux jonctions (orifices suivants).

Bien que l'expression analytique de la fonction f(Qi) ne soit pas connue, on imagine aisément que la section de passage(section des orifices) nécessaire à l'évacuation d'un volume de liquide doit être plus importante que la section de passage nécessaire à l'évacuation d'un volume de gaz. Donc la densité de trou à la partie inférieure du tube percé sera plus importante qu'à la partie supérieure de ce tube (sauf cas de fonctionnement à GOR très élevé ou à pression élevée). Le dimensionnement du tube de sortie sera fait de préférence de façon à ce que la plage normale de variation du niveau soit située au milieu du ballon.

Des essais du dispositif selon l'invention ont montré qu'il était possible d'absorber des variations brutales de GOR pouvant survenir à la sortie d'une conduite et de délivrer un fluide polyphasique dont la masse volumique est pratiquement constante et égale à la masse volumique moyenne du fluide à l'entrée du ballon (moyenne dans le temps).De plus, ce ballon peut constituer une réserve de liquide destinée à évacuer, par la pompe polyphasique, une poche de gaz sec très importante (cette poche peut apparaître au cours des phases de démarrage du puits).

## Revendications

1. Dispositif d'agitation des particules d'un écoulement polyphasique comportant au moins une phase liquide et une phase gazeuse, ledit dispositif comportant un réservoir (2) de séparation desdites phases, ledit réservoir comportant des moyens de prélèvement (3) du contenu de ce réservoir et des moyens d'injection (1) du mélange polyphasique, caractérisé en ce que lesdits moyens d'injection sont situés à proximité du fond du réservoir et comportent au moins un orifice (6) d'injection produisant au moins un jet dirigé vers le fond du réservoir.

2. Dispositif selon la revendication 1, caractérisé en ce que lesdits moyens d'injection comportent au moins un tube d'injection sensiblement horizontal et en ce que les orifices d'injection (6) sont répartis sur la partie inférieure dudit tube.

3. Dispositif selon la revendication 2, caractérisé en ce que ledit tube d'injection (1) est sensiblement horizontal situé dans la moitié inférieure du réservoir.

4. Dispositif selon la revendication 2, caractérisé en ce que lesdits orifices d'injection (6) sont dirigés vers le bas et en biais de part et d'autre de l'axe perpendiculaire au tube, avec un angle compris entre 0° et 90°.

5. Dispositif selon la revendication 2, caractérisé en ce que lesdits orifices (6) ont une forme circulaire.

6. Dispositif selon la revendication2, caractérisé en ce que ledit tube d'injection a une forme de tore pour un réservoir vertical.

7. Dispositif selon la revendication 2, caractérisé en ce que ledit tube d'injection a une forme de rectangle dans le cas d'utilisation d'un réservoir horizontal.

8. Dispositif selon la revendication 1, caractérisé en ce que lesdits moyens de prélèvement comportent au moins un tube de prélèvement et en ce que les ouvertures de prélèvement (4) sont réparties sur ledit tube.

9. Dispositif selon la revendication 8 caractérisé en ce que ledit tube de prélèvement comporte au moins une sortie commune (5) pour la phase liquide et la phase gazeuse.

10. Dispositif selon la revendication 8, caractérisé en ce que ledit tube de prélèvement comporte au moins deux sorties (12, 13) distinctes.

11. Application du dispositif décrit dans l'une des revendications 1 à 10 à l'homogénéisation des phases dans le cas de production d'un effluent pétrolier.

## Claims

1. A device for agitating particles in a multiphase flow comprising at least one liquid phase and one gaseous phase, this device having a tank (2) for separating the phases, the tank comprising means (3) for drawing off the contents of this tank and means (1) for injecting the multiphase mixture, characterised in that these injection means are located close to the bottom of the tank and have at least one injection orifice (6) producing at least one jet directed towards the bottom of the tank.

2. A device in accordance with claim 1, characterised in that the injection means have at least one substantially horizontal injection tube and in that the injection orifices (6) are distributed over the lower part of the tube.

3. A device in accordance with claim 2, characterised in that the injection tube (1) is substantially horizontal and is located in the lower half of the tank.

4. A device in accordance with claim 2, characterised in that the injection orifices (6) are directed downwards and at an angle on either side of the axis perpendicular to the tube, with an angle ranging between 0° and 90°.

5. A device in accordance with claim 2, characterised in that the orifices (6) are circular in shape.

6. A device in accordance with claim 2, characterised in that the injection tube is in the shape of a torus if a vertical tank is used.

7. A device in accordance with claim 2, characterised in that the injection tube is rectangular in shape if a horizontal tank is used.

8. A device in accordance with claim 1, characterised in that the drawing-off means have at least one drawing-off tube and in that the drawing-off openings (4) are distributed over the tube.

9. A device in accordance with claim 8, characterised in that the drawing-off tube has at least one common outlet (5) for the liquid phase and the gas phase.

10. A device in accordance with claim 8, characterised in that the drawing-off tube has at least two separate outlets (12, 13).

11. Application of the device described in one of claims 1 to 10 to the homogenisation of phases in the production of a petroleum effluent.

## Patentansprüche

1. Vorrichtung zum Durchführen bzw. Umherwirbeln der Partikel einer Mehrphasenströmung mit wenigstens einer flüssigen Phase und einer gasförmigen Phase, wobei diese Vorrichtung einen Speicher (2) zum Trennen dieser Phasen umfaßt, dieser Speicher Entnahmemittel (3) für den Inhalt dieses Speichers sowie Mittel zur Injektion (1) des Mehrphasengemisches umfaßt, dadurch gekennzeichnet, daß diese Injektionsmittel benachbart dem Boden des Speichers angeordnet sind und wenigstens eine Injektionsöffnung (6), die wenigstens einen gegen den Boden des Speichers gerichteten Strahl erzeugt, umfassen.

2. Vorrichtung nach Anspruch 1, dadurch gekennzeichnet, daß diese Injektionsmittel wenigstens ein im wesentlichen horizontales Injektionsrohr umfassen und daß die Injektionsöffnungen (6) über den unteren Teil dieses Rohrs verteilt sind.

3. Vorrichtung nach Anspruch 2, dadurch gekennzeichnet, daß sich dieses Injektionsrohr (1) im wesentlichen horizontal in der unteren Hälfte des Speichers befindet.

4. Vorrichtung nach Anspruch 2, dadurch gekennzeichnet, daß diese Injektionsöffnungen (6) nach unten gerichtet sind und schräg zu beiden Seiten der zum Rohr senkrechten Achse unter einem Winkel zwischen 0° und 90° gerichtet sind.

5. Vorrichtung nach Anspruch 2, dadurch gekennzeichnet, daß diese Öffnungen (6) eine kreisförmige Gestalt haben.

6. Vorrichtung nach Anspruch 2, dadurch gekennzeichnet, daß dieses Injektionsrohr eine Torusgestalt für einen vertikalen Speicher hat.

7. Vorrichtung nach Anspruch 2, dadurch gekennzeichnet, daß dieses Injektionsrohr eine rechtwinkelige Gestalt im Falle der Verwendung eines horizontalen Speichers hat.

8. Vorrichtung nach Anspruch 1, dadurch gekennzeichnet, daß diese Entnahmemittel wenigstens ein Entnahmerohr umfassen und daß die Entnahmeöffnungen (4) über dieses Rohr verteilt sind.

9. Vorrichtung nach Anspruch 8, dadurch gekennzeichnet, daß dieses Entnahmerohr wenigstens eine gemeinsame Austrittsöffnung (5) für die flüssige Phase und die gasförmige Phase umfaßt.

10. Vorrichtung nach Anspruch 8, dadurch gekennzeichnet, daß dieses Entnahmerohr wenigstens zwei unterschiedliche Ausgänge (12,13) hat.

11. Anwendung der in einem der Ansprüche 1-10 beschriebenen Vorrichtung auf die Homogenisierung der Phasen im Falle der Produktion eines Erdölabstroms.

EP 0 488 838 B1

**FIG.1**

**FIG.5**

**FIG.3**

EP 0 488 838 B1

FIG.2

FIG.4

8

EP 0 488 838 B1

FIG.6

9